# EUROPEAN PATENT APPLICATION

(11) **EP 1 801 743 A1**
(43) Date of publication of application: **27.06.2007**
(21) Application number: 06022776.6
(22) Date of filing: 02.11.2006
(51) Int. Cl.: G06Q 10/00

(54) **System and method for calendar presence retrieval**

(30) Priority: 23.11.2005 US 286893
(71) Applicant: Alcatel Lucent, 75008 Paris (FR)
(72) Inventor: Mihir, Vaidya, TX 75062 Irving (US); Timucin, Ozugur, TX 75069 Fairview (US); Sandeep, Thirumalai, TX 75252 Dallas (US); Nirav, Shah, WA 98052 Redmond (US); Paul, Jain, TX 75252 Dallas (US)
(74) Representative: Schäfer, Wolfgang

(57) **Abstract**

A presence system enables retrieval of calendar presence information (225) of presentities (110) from calendar servers (230) using a calendar agent (200) and calendar interfaces (240) to the calendar servers (230). Each calendar server (230) maintains calendar schedule information (255) for one or more of the presentites (110). The calendar agent (200) is operable to generate queries (400) for the calendar schedule information (255) to the calendar servers (230) via a respective calendar interface (240) for each calendar server (230). The calendar agent (200) is further operable to receive calendar schedule information (255) from the calendar servers (230) via the respective calendar interfaces (240), and to convert the received calendar schedule information (255) into calendar presence information (225). Each calendar interface (240) is configured to communicate with the calendar agent (200) via a first protocol (245) and to communicate with a respective one of the calendar servers (230) via a respective second protocol (235).

## Description

### BACKGROUND OF THE INVENTION

### Technical Field of the Invention

The present invention relates in general to a presence-based communication system, and in particular, to retrieving calendar presence information.

### Description of Related Art

Presence-based interactive communication systems enable callees (presentities) to publish, in real-time, their presence information, such as the availability and current status of the callee devices/applications, to callers (presence watchers). Presence systems typically incorporate presence servers to manage the presence information for a plurality of presentities. Presence servers currently automatically receive updated presence information from various presence sources, such as telephone applications or instant messaging applications, and aggregate the received presence information to reflect the presence status of the presentities. For example, when a presentity initiates or receives a voice call on his or her desktop phone, the presence server is notified and changes the presence status of the presentity to "On the Phone." Presence servers further provide the current presence status of presentities to watchers of the presentities to assist the watchers in establishing real-time voice, text and/or multimedia communication sessions with the presentities.

Another potential source of presence information is calendar/scheduler applications. Calendar/scheduler applications are used frequently to plan and schedule various activities, such as meetings, phone calls, business trips, personal time and other user events. Thus, a calendar/scheduler application is capable of providing a user's day to day agenda with a high level of accuracy. In enterprise applications, each calendar/scheduler application is normally associated with a calendar server, such as the Microsoft Exchange Server®, IBM Domino Server® or Meeting Maker® server. The calendar server maintains the schedules of all users within the enterprise that use that calendar service. As a result, the data stored in the server databases can be used to gather rich calendar presence information, such as current availability, location, predicted availability, etc.

In order to retrieve calendar presence information from a particular calendar server, the presence server must be capable of communicating with that calendar server. However, many calendar servers communicate using different proprietary APIs and/or protocols. As such, there is currently no known uniform architecture or framework for effectively retrieving calendar presence information from calendar servers. Therefore, what is needed is a uniform architecture that provides a common interface to any calendar server and that provides a common framework to convert calendar/schedule information to rich presence information.

### SUMMARY OF THE INVENTION

Embodiments of the present invention provide a presence system for retrieving calendar presence information of presentities. The presence system includes a calendar agent operable to generate queries for calendar schedule information to calendar servers, receive calendar schedule information from calendar servers and to convert the received calendar schedule information to calendar presence information of presentities. The presence system further includes calendar interfaces, each configured to communicate with the calendar agent via a first protocol to receive the queries and provide the calendar schedule information retrieved from the calendar servers to the calendar agent. The calendar interfaces are each further configured to communicate with a respective one of the calendar servers via a respective second protocol to provide respective ones of the queries to the respective calendar server and to receive from the respective calendar server the calendar schedule information.

For example, in one embodiment, a calendar interface receives the calendar schedule information from its respective calendar server in response to providing a query from the calendar agent to its respective calendar server. In another embodiment, the calendar schedule information includes updated calendar schedule information, and a calendar interface receives the updated calendar schedule information from its respective calendar server asynchronously in response to changes in calendar schedule information of one or more of presentities associated with the calendar server.

Embodiments of the present invention further provide a presence server for retrieving calendar presence information of presentities and providing the calendar presence information to watchers of the presentities. The presence server includes a calendar agent in communication with calendar servers via a respective calendar interface to each of said calendar servers to retrieve calendar schedule information of the presentites from the calendar servers and to convert the retrieved calendar schedule information to calendar presence information. In addition, the presence server includes a cache maintained by the calendar agent to store the calendar presence information of the presentities. In one embodiment, the calendar agent is operable to provide real-time updates of the calendar presence information to watchers of the presentities using the calendar presence information stored in the cache.

Embodiments of the present invention further provide a method for retrieving calendar presence information of presentities. The method includes generating queries for the calendar schedule information of the presentities in a first format and converting each of the queries from the first format to a respective second format associated with a respective calendar application maintaining the calendar schedule information of the presentities. The method further includes retrieving the calendar schedule information from each of the calendar applications in the respective second format and converting the calendar schedule information from the respective second format to the first format for processing of the calendar schedule information as calendar presence information.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary presence system for retrieving calendar presence information of presentities, in accordance with embodiments of the present invention;
FIGURE 3 illustrates an exemplary data structure for storing calendar presence information, in accordance with embodiments of the present invention;
FIGURE 4 illustrates an exemplary format of a message for retrieving calendar presence information; and
FIGURE 5 is a flowchart illustrating an exemplary process for retrieving calendar presence information of presentities, in accordance with embodiments of the present invention.

### DETAILED DESCRIPTION OF THE DRAWINGS

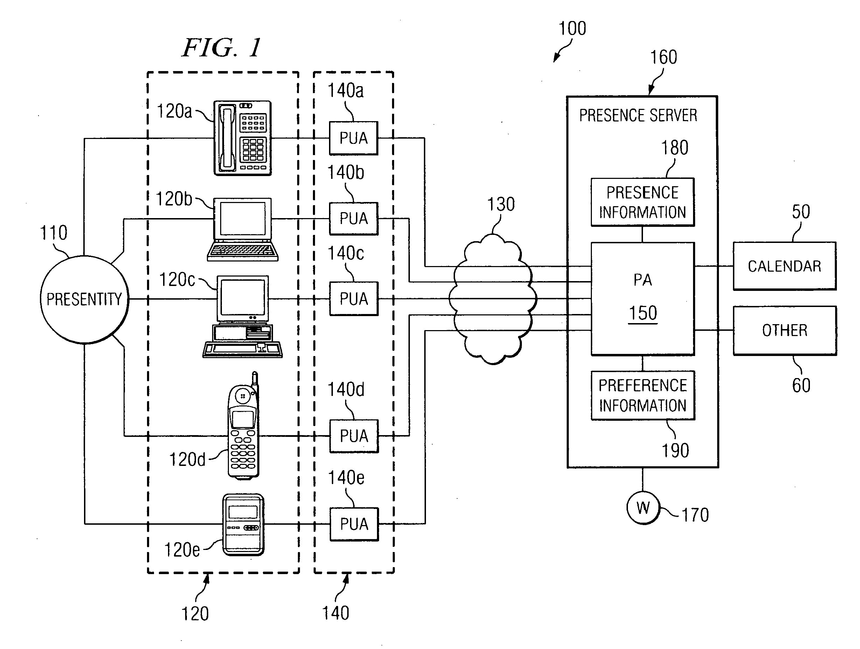

Referring to FIGURE 1, there is illustrated an exemplary presence system 100 capable of implementing various embodiments of the present invention. The presence system 100 includes one or more presentites (one of which is shown for convenience) 110 and one or more terminals 120 associated with the presentity 110. The presentity 110 represents the callee and provides presence information on the callee's presence status to the presence system 100. Each terminal 120 is a physical communications device capable of sending and/or receiving communications over a communications network 130. Examples of such terminals 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (e.g., circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110.

In FIGURE 1, a separate PUA 140 is shown for each terminal 120. However, it should be understood that in other embodiments, the number of PUAs 140 can vary based on the number and type of terminals 120, the applications supported by the terminals 120 and the system configuration. Each PUA 140 represents a telephony application that independently generates a component of the overall presence information for a presentity 110. Typically, PUA 140 generates presence information when a change in presence status occurs. Examples of changes in presence status include, but are not limited to, turning on and off a terminal 120, modifying the registration from a terminal 120 and changing the instant messaging status on a terminal 120. As an example, when a presentity initiates or answers a phone call, the telephone application notifies the presence server to set the presentity's presence status to "On the Phone."

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110.

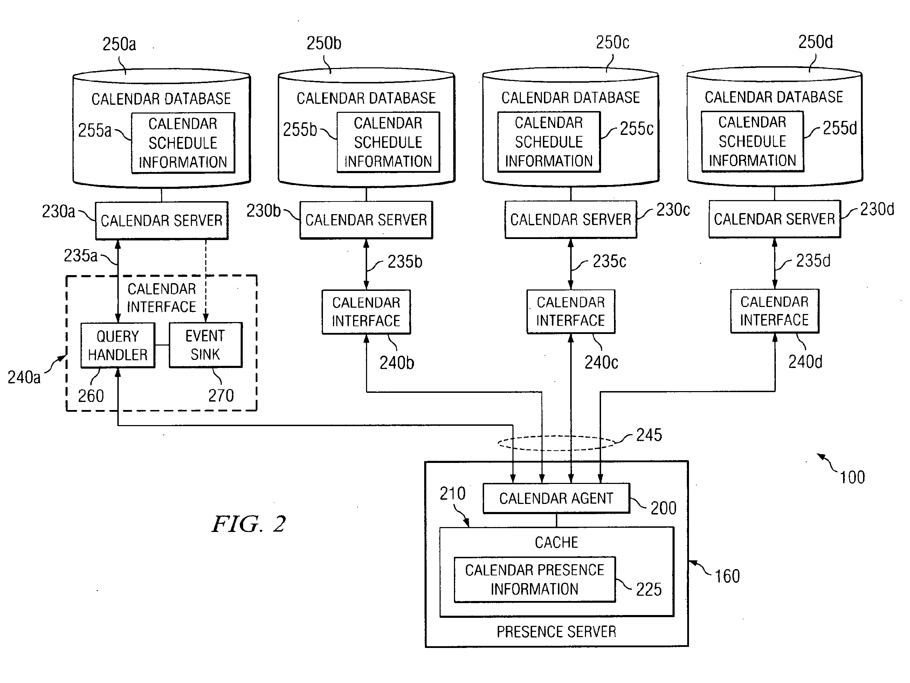

In addition, in accordance with embodiments of the present invention, the PA 150 collects presence information from one or more calendar/scheduler applications 50 (e.g., Microsoft Exchange Server®, IBM Lotus Notes®, Meeting Maker® or other similar application) and other sources 60 of presence information (e.g., an instant messaging application). For example, if a presentity has a meeting scheduled on his or her calendar from 10:00 a.m. to 12:00 p.m., at 10:00 a.m., the calendar/scheduler application 50 notifies the PA 150, as described in connection with FIGURE 2 below, to set the presentity's presence status to "In a Meeting."

The PA 150 aggregates the presence information from each of the sources (e.g., PUA's 140, calendar 50 and other sources 60) and maintains the current complete presence information for the presentity 110. The presence information 180 indicates, for example, the availability of the presentity, the current activity of the presentity, the local time where the presentity is located, the current location of the presentity and the current status of the active terminals and/or applications running on active terminals. The PA 150 is further operable to provide the presence information to one or more watchers 170 (callers or communication session initiators) who have subscribed to the presence service of the presentity 110.

The presence server 160 further stores preference information 190 (e.g., terminal preferences) for the presentities 110 and watchers 170 of the presence system 100. For example, the preference information 190 can include both presentity preference information (e.g., privacy filters) set by the presentity 110 for each watcher 170 and watcher preference information (e.g., watcher filters) set by each watcher 170 for presentities 110. The preference information 190 operates to filter the presence information 180 of a presentity 110 provided to a watcher 170 to accommodate privacy concerns, prioritization requirements, administrator policies and security considerations.

The presence server 160 is a physical entity that can operate as either the PA 150 or as a proxy server for routing requests from watchers 170 to the PA 150. The presence server 160 stores the presence information 180 and preference information 190 for a plurality of presentities 110 and watchers 170. Thus, the PA 150, in combination with the presence server 160, is operable to receive presence information of the presentity 110 from the PUAs 140, receive requests from watchers 170 for the presence information and provide the presence information to the watcher (s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

FIGURE 2 provides an exemplary architecture within a presence system 100 for a presence server 160 to communicate with multiple calendar servers 230a-230d to retrieve calendar presence information 225 of presentities subscribed to the presence server 160, in accordance with embodiments of the present invention. The architecture includes a calendar agent 200 and calendar interfaces 240a-240d, each for communicating with a respective calendar server 230a-230d.

The calendar agent 200 communicates with all of the calendar interfaces 240a-240d using a common first protocol 245, while each calendar interface 240a-240d communicates with its respective calendar server 230a-230d using a respective second protocol. For example, in one embodiment, the first protocol 245 is SIP, XML or another standard protocol, and each second protocol 235a-235d is a proprietary API and/or protocol or a standard protocol associated with the respective calendar server 230a-230d.

Each calendar server 230a-230d is associated with a respective calendar application that provides a calendar service to one or more users. For example, in an exemplary enterprise application, each calendar server 230a-230d is associated with a different calendar application, such as Microsoft Outlook®, Meeting Maker® or another calendar application. Each calendar server 230a-230d communicates with a respective calendar database 250a-250d to maintain raw calendar data (hereinafter referred to as calendar schedule information 255a-255d, respectively), representing the schedules of all users of the calendar service.

Since one or more of the users of the calendar services may be a presentity subscribed to the presence server 160, the calendar schedule information 255a-255d within the calendar databases 250a-250d may be used to obtain calendar presence information 225. Specifically, calendar databases 250a-250d include calendar schedule information 255a-255d that can be converted to calendar presence information 225 for those presentities of the presence system 100 that are users of the calendar service provided by one of the calendar servers 230a-230d. For example, such calendar schedule information 255a-255d can include presentity meeting dates and times stored in the calendar databases 250a-250d.

In accordance with embodiments of the present invention, the calendar agent 200 operates to retrieve the calendar schedule information 255a-255d from each calendar server 230a-230d in the presence system 100 via calendar interfaces 240a-240d. In one embodiment, the calendar agent 200 receives the calendar schedule information 255a-255d from the calendar servers 250a-250d via the calendar interfaces 240a-240d in response to queries for the calendar schedule information 255a-255d sent by the calendar agent 200. In another embodiment, the calendar agent 200 receives the calendar schedule information 255a-255d from the calendar servers 250a-250d via the calendar interfaces 240a-240d as a result of dynamic updates provided by the calendar servers 250a-250d.

Each calendar interface 240a-240d is configured to communicate with its respective calendar server 230a-230d to provide requests for calendar schedule information 255a-255d to the calendar server 230a-230d and to communicate with the calendar agent 200 to provide the retrieved calendar schedule information 255a-255d from the calendar server 230a-230d to the calendar agent 200. The calendar agent 200 processes the raw calendar data (retrieved calendar schedule information 255a-255d) to convert the calendar schedule information 255a-255d into calendar presence information 225.

As such, the calendar agent 200 includes any hardware, software, firmware, or combination thereof for converting calendar schedule information 255a-255d into calendar presence information 225 and for managing the calendar presence information 225. Likewise, the calendar interfaces 240a-240d each include any hardware, software, firmware, or combination thereof for interfacing between its calendar server 230a-230d and the calendar agent 200. As an example, the calendar agent 200 and/or calendar interfaces 240a-240d can include one or more processors that execute instructions and one or more memories that store instructions and data used by the processors. A processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein. As another example, the calendar agent 200 and/or calendar interfaces 240a-240d can include one or more processes, such as software applications providing an activity, a function, or a systematic sequence of tasks that produces a specified result.

In one embodiment, one or more of the calendar interfaces 240a-240d is included within the presence server 160. In another embodiment, one or more of the calendar interfaces 240a-240d is a stand-alone system capable of accessing the presence server 160. In a further embodiment, one or more of the calendar interfaces 240a-240d is included within its respective calendar server 230a-230d.

Each calendar interface 240a-240d includes a query handler 260 and an event sink 270. However, for simplicity, only calendar interface 240a is shown including the query handler 260 and event sink 270. The query handler 260 of calendar interface 240a communicates with the calendar agent 200 using the first protocol 245 and communicates with the calendar server 230a using the second protocol 235a associated with calendar server 230a.

The query handler 260 receives queries from the calendar agent 200 in the first protocol 245 and provides both responses to the queries and any calendar schedule information 255a received from the calendar server 250a to the calendar agent 200 in the first protocol. The query handler 260 further communicates with the calendar server 230a in the second protocol 235a to fulfill the calendar agent queries. For example, in one embodiment, the calendar agent 200 generates a query requesting calendar schedule information 255a of one or more presentities to the query handler 260 of calendar interface 240a in the first protocol 245. Upon receipt of the query, the query handler 260 converts the query from a format associated with the first protocol 245 to a format associated with the second protocol 235a, and provides the query in the second protocol 235a to the calendar server 230a.

The event sink 270 of calendar interface 240a is configured to receive calendar schedule information 255a for one or more presentities from the calendar server 230a in the second protocol 235a and to provide the received calendar schedule information 255a to the query handler 260 for communication to the calendar agent 200 in the first protocol 245. For example, in one embodiment, the event sink 270 of calendar interface 240a is configured to receive calendar schedule information 255a in response to a query requesting calendar schedule information 255a sent by the calendar agent 200 and provided to the calendar server 230a by the query handler 260.

In another embodiment, the event sink 270 of calendar interface 240a is configured to receive asynchronous updates of calendar schedule changes from the calendar server 230a in response to changes in calendar schedule information 255a in the calendar database 250a noted by the calendar server 230a. For example, the calendar server 230a can include triggers that cause the calendar server 230a to provide updated calendar schedule information 255a to the event sink 170. As an example, if a user/presentity accesses the calendar server 230a to make a change to a meeting (e.g., change the meeting time, place or location) stored in the calendar database 250a, such a change can initiate a trigger in the calendar server 230a to provide the meeting changes to the event sink 170. The particular technique for retrieving the calendar presence information 225 from the calendar server 230a is dependent upon the interfaces provided by the calendar server 230a.

In one embodiment, the event sink 270 communicates the calendar presence information 225 to the query handler 260 using, for example, a remote procedure call (RPC) or TCP/UDP sockets. In another embodiment, the event sink 270 and query handler 260 are included as part of the same process, thereby making communication between the event sink 270 and query handler 260 trivial.

In an exemplary embodiment, the calendar agent 200 generates a query to the query handler 260 of calendar interface 240a with a list of presentities for which the calendar agent 200 would like to receive calendar schedule information 255a. In response to the query, the query handler 260 subscribes to the calendar server 230a to monitor the calendar schedule information 255a of the presentities on the list. Thus, in this exemplary embodiment, the query handler 260 converts the query from the first protocol 245 to the second protocol 235a by initiating the subscription process.

For example, in one embodiment, the query handler 260 registers with the calendar server 230a as an administrative user to obtain access to calendar schedule information 255a of the presentities on the list. Depending on the settings in the calendar server 230a, the query handler 260 can be granted to access to only the presentities identified on the list, to one or more groups of users of the calendar service that include the presentities on the list or to all users of the calendar service. If the query handler 260 is granted access to calendar schedule information 255a of users who are not presentities on the list, either the query handler 260 discards any calendar schedule information 255a received by the event sink 270 for those users who are not presentities on the list before passing the calendar schedule information 255a to the calendar agent 200 or the calendar agent 200 discards this calendar schedule information 255a upon receipt.

The query handler 260 can periodically poll the calendar server 230a for updated calendar schedule information 255a of the presentities on the list, wait for automatic updates provided by the calendar server 230a to the event sink 270 and/or download all calendar schedule information 255a within a predetermined time interval for all presentities on the list. For example, the predetermined time interval can be a sliding window (e.g., four weeks), such that for each download, the event sink 270 downloads all of the calendar schedule information 255a that is associated with calendar events scheduled to occur within a time interval from the current day to four weeks from the current day for all presentities on the list.

In one embodiment, the query handler 260 is configured to automatically periodically perform the polling and/or downloading in response to receipt of the list of presentities from the calendar agent 200. The query handler 260 can be pre-programmed with the polling and/or downloading times or the query sent from the calendar agent 200 to the query handler 260 can include the polling and/or downloading times. In another embodiment, the query handler 260 is configured to perform the polling and/or downloading only in response to a subsequent query that includes an instruction to poll and/or download from the calendar agent 200. For example, once the calendar agent 200 has provided the list of presentities to the query handler 260 in a first query, the calendar agent 200 can generate a subsequent query requesting the query handler 260 to retrieve updated calendar schedule information 255a on those presentities previously identified in the list in order to minimize the size of each query sent from the calendar agent 200 to the query handler 260.

Once the calendar agent 200 converts the calendar schedule information 255a-255d received from calendar interfaces 240a-240d, respectively, to calendar presence information 225, the calendar agent 200 maintains a cache 220 of all of the calendar presence information 225. The calendar presence information 225 includes information on various activities, such as meetings, phone calls, business trips, personal time and other user events, taken from the calendar schedule information 255a-255d stored in the calendar databases 250a-250d. By way of example, but not limitation, the calendar presence information 225 can include meeting dates and times, presentity identities (user names) of each party expected to attend a meeting, user names of each party invited to attend a meeting, meeting locations, the category or subject of the meeting and any other information recorded in the calendar databases 250a-250d related to a meeting or other activity. The calendar agent 200 uses the cache 220 to provide real-time updates of calendar presence information 225 to watchers of presentities subscribed to the presence system 100.

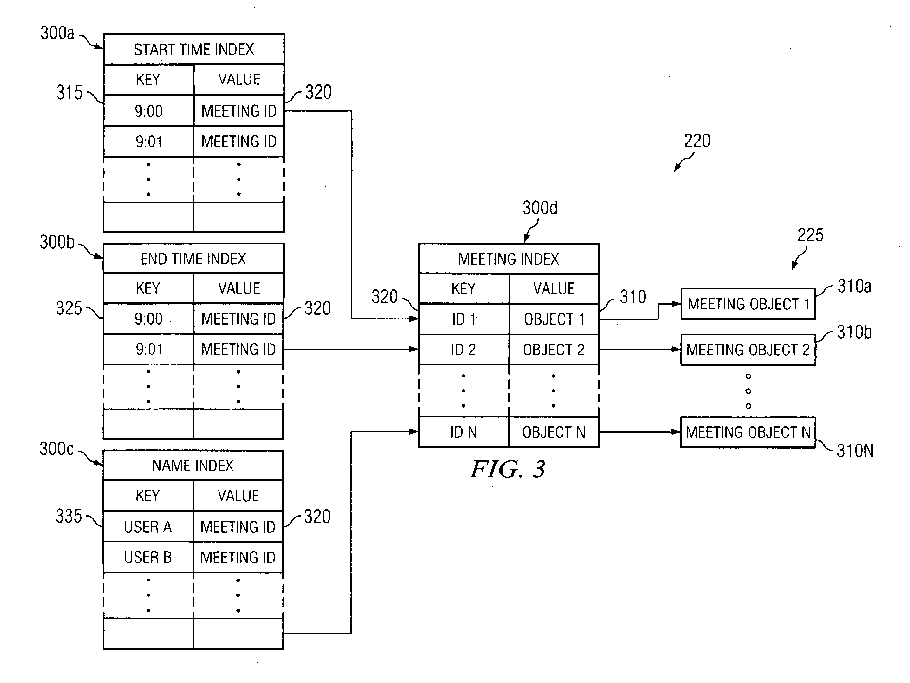

FIGURE 3 illustrates an exemplary data structure for storing the calendar presence information 225 in the cache 220, in accordance with embodiments of the present invention. As described above, the calendar presence information 225 includes information on various activities, such as meetings, phone calls, business trips, personal time and other user events (hereinafter collectively referred to as "meetings"). The cache 220 stores the calendar presence information 225 according to these "meetings." Thus, within the cache 220 are a number of meeting objects 310a, 310b ... 310N, each including information on a particular one of the meetings. Each meeting object 310 further has a meeting identifier 320 associated therewith that uniquely identifies the meeting object 310 in the cache 220. In one embodiment, the meeting identifier 320 is assigned by the calendar agent (200, shown in FIGURE 2) upon the initial receipt of the meeting information. Thereafter, the calendar agent associates all updates to the meeting information with the previously assigned meeting identifier 320.

As can be seen FIGURE 3, the cache 220 is built in the form of indexes 300a-300d, each associating a particular type of calendar presence information 225 with a meeting identifier 320. Each index 300a-300d is used to enable real-time updates of calendar presence information 225 to watchers. For example, start time index 300a associates meeting start times 315 with meeting identifiers 320, while end time index 300b associates meeting end times 325 with meeting identifiers. By indexing on meeting start times 315 and meeting end times 325, the calendar agent is able to obtain the meeting identifiers 320 for all meetings that start or end at a particular time. From the meeting identifiers 320, the calendar agent can index on and locate the actual meeting objects 310 using the meeting index 300d.

As another example, name index 300c associates a user/presentity identity 335 with meeting identifiers 320.

By indexing on a particular user/presentity identity 335, the calendar agent is able to obtain the meeting identifiers 320 for all meetings associated with that user/presentity. From the meeting identifiers 320, the calendar agent can index on and locate the actual meeting objects 310 using meeting index 300d. The number and type of indexes is variable, and is not limited to any of the index types listed herein.

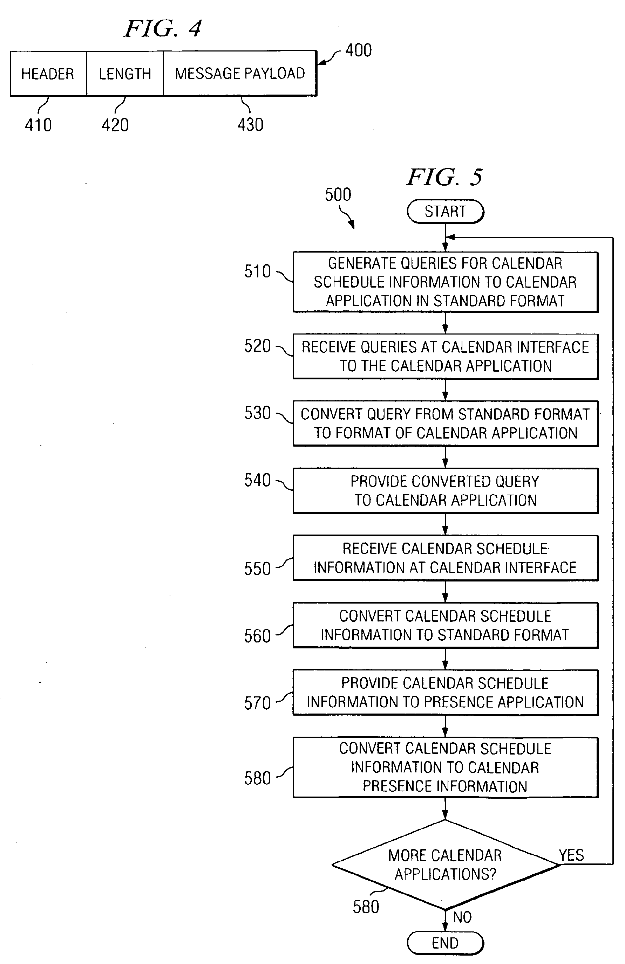

FIGURE 4 illustrates an exemplary format of a message 400 for retrieving calendar presence information. In one embodiment, the message 400 is a query from the calendar agent (200, shown in FIGURE 2) requesting calendar schedule information of one or more presentities. In another embodiment, the message 400 is a response from a calendar interface (240, shown in FIGURE 2) including calendar schedule information.

The message 400 generally includes a header field 410, a length field 420 and message payload field 430. The specific information included in each field 410, 420 and 430 depends on the protocol used for communication between the calendar agent and the calendar interfaces. For example, in one embodiment, the communication protocol between the calendar interfaces and the calendar agent is SIP. In such an embodiment, both the calendar interfaces and the calendar agent are clients to the presence server and are subscribed to each other. Having this subscription in place, the calendar agent and the calendar interfaces can send SIP NOTIFY messages to each other. The header 410 of the SIP NOTIFY message determines the service required.

The length 420 of the message in characters is used for detecting the end of the message.

For example, in an exemplary embodiment, the header 410 can be one of the following:
ADD_USER_LIST: This is sent by the calendar agent to the calendar interface. This header is used to send the list of users that is to be monitored for calendar schedule information.
1. REMOVE_USER_LIST: This is sent by the calendar agent to the calendar interface. This header is used to notify the calendar interface to stop listening for calendar schedule information for a specific set of users.
2. MEETING_MODIFICATION: This is sent by the calendar interface to the calendar agent to inform addition of new meetings or modification of existing meetings.
3. GET_MEETINGS: This is sent by the calendar agent to the calendar interface as a request for getting the meetings of all users within a specific range of date/time.
4. SPECIFIC QUERY: This is a query sent by the calendar agent to the calendar interface to obtain a set of meetings satisfying the query.
5. QUERY_RESULT: This is the result for a query sent by the calendar interface to the calendar agent.
6. MEETING_LIST: This is a list of meetings as a response to the GET_MEETINGS query. This is sent from the calendar interface to the calendar agent.
7. MEETING_DELETION: This is sent by the calendar interface to the calendar agent to inform deletion of meetings.
8. ERR_ADD_USER: A packet with this header is sent by the calendar interface to the calendar agent as a result of ADD_USER_LIST if and only if any of the users in the ADD_USER_LIST does not exist in the Calendar Server database. The packet contains the list of users that were not successfully registered.
9. ERR_REMOVE_USER: The packet with this header is sent by the calendar interface to the calendar agent as a result of REMOVE_USER_LIST if and only if any of the users in the REMOVE_USER_LIST does not exist in the registered list of users on the Calendar Server. The packet contains the list of users that were not successfully removed.

In addition, for a SIP implementation, the message payload field 430 can include a type and a value. The type indicates the type of data included in the message 400, whereas the value contains the actual data in the form of characters. In an exemplary embodiment, the type can be one of the following:

| Type | Meaning |
|---|---|
| 01 | StartDate of the meeting |
| 02 | End Date of the meeting |
| 03 | Meeting ID |
| 04 | Owner of the meeting |
| 05 | Href |
| 06 | Meeting Location |
| 07 | Resources for the meeting |
| 08 | File Attachments for the meeting |
| 09 | Category of the meeting |
| 10 | List of participants ";" separated |
| 11 | Description of the meeting |
| 12 | Subject of the meeting |
| 13 | Query ID |
| 14 | End of meeting object(send nothing) |

In another embodiment, messages 400 can be in the form of XML queries. In such an embodiment, the XML schema defines all the query parameters.
An example format of an XML query to "Get Meetings" is as follows: 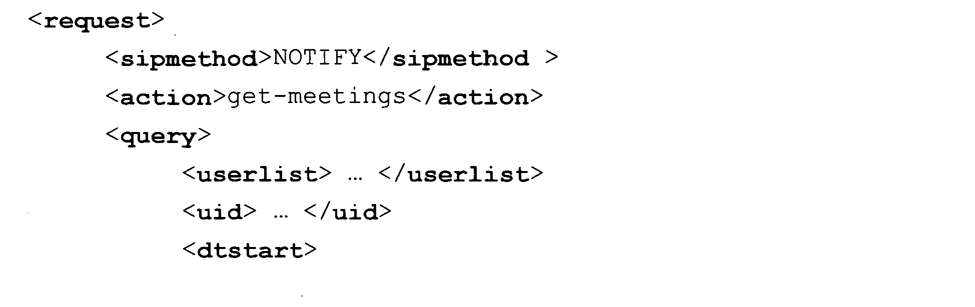 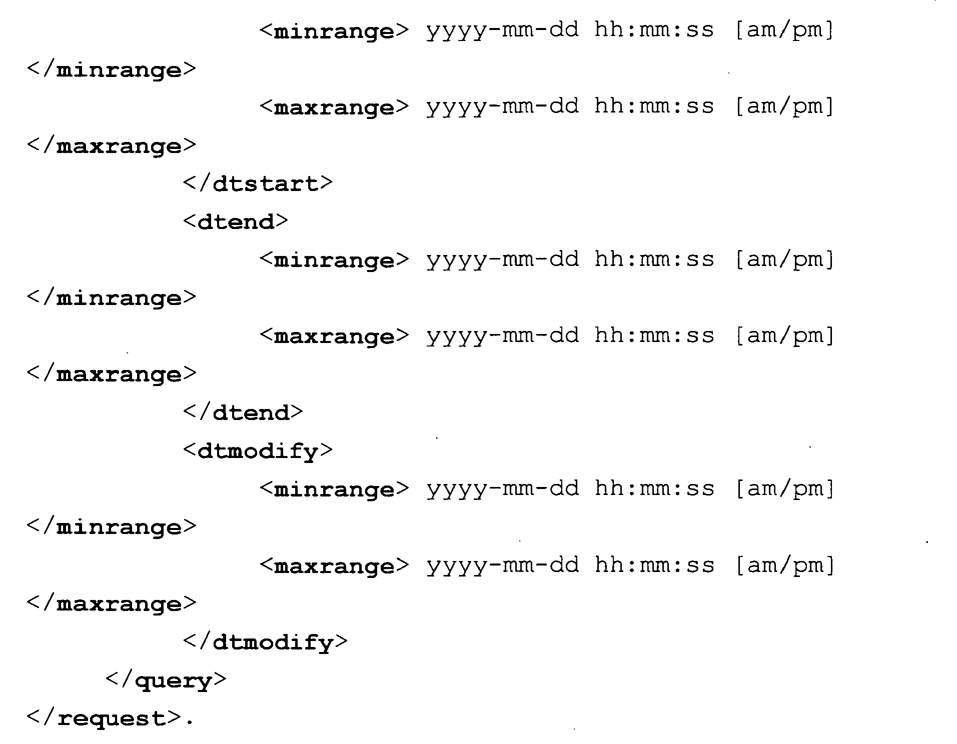 If the XML query does not contain a user list, the calendar interface executes the query for the user list it received in a SUBSCRIBE message. However, if a new user list is specified in the query, the new user list is used when executing only this query. The new user list does not overwrite any user list sent to the calendar interface in the SUBSCRIBE message. An example format of an XML response to a query is as follows:

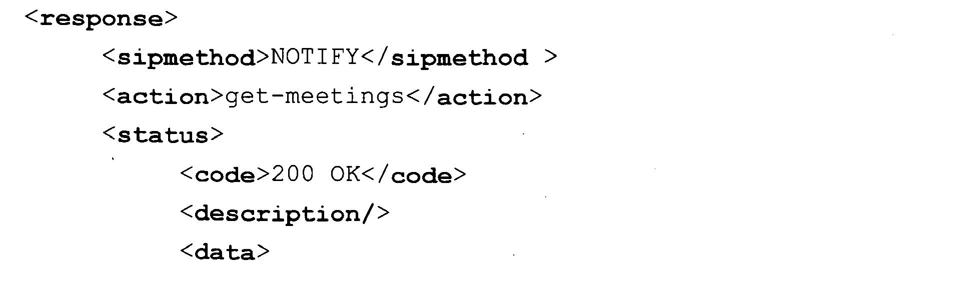

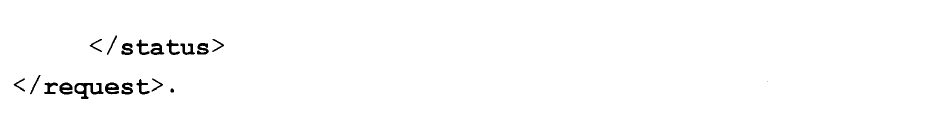

FIGURE 5 is a flowchart illustrating an exemplary process 500 for retrieving calendar presence information of presentities, in accordance with embodiments of the present invention. At block 510, one or more queries for calendar schedule information of presentities of a presence application are generated in a first format to a calendar application that provides a calendar service to the presentities. At block 520, the queries are received at a calendar interface to the calendar application. At block 530, the calendar interface converts each of the queries from the first format to a second format associated with the calendar application, and at block 540, provides the converted queries to the calendar application.

For example, in one embodiment, at least one of the queries includes a list of presentities to monitor for calendar schedule information. To convert the queries into the second format, the calendar interface subscribes to the calendar application to either periodically poll the calendar application for the calendar schedule information of the presentities on the list (automatically or in response to subsequent queries), immediately download from the calendar application the calendar schedule information of the presentities on the list or automatically receive updated calendar schedule information from the calendar application for the presentities on the list.

Thus, at block 550, the calendar interface receives the calendar schedule information (new or updated) from the calendar application in the second format, converts the received calendar schedule information from the second format to the first format at block 560, and at block 570, provides the calendar schedule information to the presence application in the first format for subsequent processing of the calendar schedule information to convert the calendar schedule information to calendar presence information at block 580. At block 590, this process is repeated for each calendar application storing calendar schedule information that can be converted to calendar presence information of presentities served by the presence application.

The following features, separately or in any combination, may also constitute advantageous embodiments of the described or claimed invention:
- The claimed and/or described presence system, wherein each of said queries requests said calendar schedule information for one or more of said presentities.
- The claimed and/or described presence system, wherein one of said queries to a first one of said calendar interfaces requests said first calendar interface to monitor a list of said presentities for said calendar schedule information, add a presentity to said list, remove a presentity from said list or retrieve from said respective calendar server said calendar schedule information.
- The claimed and/or described presence system, wherein said first calendar interface is further configured to subscribe to said respective calendar server to monitor said list of said presentities for said calendar schedule information.
- The claimed and/or described presence system, wherein: said calendar presence information further includes a meeting start time and a meeting end time for each said respective meeting; and said cache includes indexes linking said meeting identifiers to said respective meeting start time and said respective meeting end time.
- The claimed and/or described presence system, wherein: said calendar presence information further includes presentity identities identifying each presentity associated with each said respective meeting; and said cache includes indexes linking said meeting identifiers to said respective presentity identities.
- The claimed and/or described presence system, further comprising: a presence server for collecting and storing presence information including said calendar presence information on said presentities and providing said presence information of said presentities to watchers of said presentities.
- The claimed and/or described presence system, wherein: said calendar presence information includes a respective meeting object for each meeting scheduled in said calendar servers for said presentities, each said meeting object including information associated with said respective meeting; said calendar agent is further operable to assign a meeting identifier to each said respective meeting information; and said cache includes indexes linking each said meeting identifier to said respective meeting information.
- The claimed and/or described presence system, wherein: said calendar presence information further includes a meeting start time and a meeting end time for each said respective meeting; and said cache includes indexes linking said meeting identifiers to said respective meeting start time and said respective meeting end time.
- The claimed and/or described presence system, wherein: said calendar presence information further includes presentity identities identifying each presentity associated with each said respective meeting; and said cache includes indexes linking said meeting identifiers to said respective presentity identities.
- The claimed and/or described method, wherein said generating said queries further includes: generating one of said queries to request monitoring a list of said presentities associated with a respective one of said calendar servers for said calendar schedule information, adding a presentity to said list, removing a presentity from said list or retrieving from said respective calendar server said calendar schedule information.
- The claimed and/or described method, wherein said retrieving further includes: subscribing to said respective calendar server to monitor said list of said presentities for said calendar schedule information.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A presence system for retrieving calendar presence information (225) of presentities (110), comprising:
a calendar agent (200) operable to generate queries (400) for calendar schedule information (255) associated with said presentities (110) to calendar servers (230), to receive said calendar schedule information (255) for said presentities (110) from said calendar servers (230) and to process said calendar schedule information (255) to convert said calendar schedule information (255) into said calendar presence information (225); and
calendar interfaces (240), each configured to communicate with said calendar agent (200) via a first protocol (245) to receive said queries (400) and provide said calendar schedule information (255) to said calendar agent (200), and each configured to communicate with a respective one of said calendar servers (230) via a respective second protocol (235) to provide respective ones of said queries (400) to said respective calendar server (230) and to receive from said respective calendar server (230) said calendar schedule information (255).

2. The presence system of Claim 1, wherein each of said calendar interfaces (240) comprises:
a query handler (260) configured to communicate with said respective calendar server (230) and said calendar agent (200) to convert messages (400) between a format associated with said first protocol (245) and a format associated with said respective second protocol (235); and
an event sink (270) configured to dynamically receive said calendar schedule information (255) and to provide said calendar schedule information (255) to said calendar agent (200).

3. The presence system of Claim 2, wherein said event sink (270) of one of said calendar interfaces (240) receives said calendar schedule information (255) from said respective calendar server (230) in response to providing a respective one of said queries (400) to said respective calendar server (230).

4. The presence system of Claim 2, wherein said calendar schedule information (255) includes updated calendar schedule information, and wherein said event sink (270) of one of said calendar interfaces (240) receives said updated calendar schedule information from said respective calendar server (230) asynchronously in response to changes in said calendar schedule information (255) of one or more of said presentities (110) associated with said respective calendar server (230).

5. The presence system of Claim 1, further comprising:
a cache (220) maintained by said calendar agent (200) for storing said calendar presence information (225) of said presentities (110), and wherein said calendar agent (200) is further operable to provide real-time updates of said calendar presence information (255) to watchers (170) of said presentities (110) using said calendar presence information (225) in said cache (220).

6. The presence system of Claim 5, wherein:
said calendar presence information (225) includes a respective meeting object (310) for each meeting scheduled in said calendar servers (230) for said presentities (110), each said meeting object (310) including information associated with said respective meeting;
said calendar agent (200) is further operable to assign a meeting identifier (320) to each said meeting object (310); and
said cache (220) includes indexes linking each said meeting identifier (320) to said respective meeting object (310).

7. A method for retrieving calendar presence information (225) of presentities (110), comprising the steps of:
generating (510) queries (400) for calendar schedule information (255) associated with said presentities (110) in a first format;
converting (530) each of said queries (400) from said first format to a respective second format associated with a respective calendar application maintaining said calendar schedule information (255) of said presentities (110);
retrieving (550) said calendar schedule information (255) from each of said calendar applications in said respective second format; and
converting (560) said calendar schedule information (255) from said respective second format to said first format for processing of said calendar schedule information (255) to convert (580) said calendar schedule information (255) to said calendar presence information (225).

8. The method of Claim 7, wherein said retrieving (550) said calendar schedule information (255) further includes receiving said calendar schedule information (255) from a respective one of said calendar applications in response to providing a respective one of said queries (400) to said respective calendar application.

9. The method of Claim 7, wherein said calendar schedule information (255) includes updated calendar schedule information, and wherein said retrieving (550) said calendar schedule information (255) further includes:
receiving said updated calendar schedule information from a respective one of said calendar applications asynchronously in response to changes in said calendar schedule information (255) of one or more of said presentities (110) associated with said respective calendar application.

10. The method of Claim 7, further comprising:
storing said calendar presence information (225) of said presentities (110) in a cache (220); and
providing real-time updates of said calendar presence information (225) to watchers (170) of said presentities (110) using said calendar presence information (225) in said cache (220).

11. A presence server for retrieving calendar presence information of presentities and providing said calendar presence information to watchers of said presentities, comprising:
a calendar agent in communication with calendar servers via a respective calendar interface to each of said calendar servers to retrieve calendar schedule information of said presentities from said calendar servers and to convert said calendar schedule information to said calendar presence information; and
a cache maintained by said calendar agent to store said calendar presence information of said presentities; wherein said calendar agent is operable to provide real-time updates of said calendar presence information to watchers of said presentities using said calendar presence information stored in said cache.
